# EUROPEAN PATENT SPECIFICATION

(11) **EP 0 619 332 B1**
(45) Date of publication and mention of the grant of the patent: **25.02.1998**
(21) Application number: 93923047.0
(22) Date of filing: 22.10.1993
(51) Int. Cl.: C08G 18/10, C08G 18/50, C08G 18/65, D06N 3/14, C08G 18/32

(54) **POLYURETHANE AND LEATHERLIKE SHEET MADE THEREFROM**
POLYURETHAN SOWIE DARAUS HERGESTELLTE LEDERÄHNLICHE FOLIE
POLYURETHANE ET FEUILLE EN SIMILI-CUIR REALISEE A PARTIR DE CELUI-CI

(30) Priority: 28.10.1992 JP 289960/92; 11.01.1993 JP 2505/93
(43) Date of publication of application: 12.10.1994
(73) Proprietor: KURARAY CO., LTD., Kurashiki-shi, Okayama-ken 710 (JP)
(72) Inventor: AKASAWA, Toshiyuki, Kurashiki-shi, Okayama-ken 710 (JP)
(74) Representative: Strehl Schübel-Hopf Groening & Partner
(86) International application number: JP9301528
(87) International publication number: WO9410220

(56) References cited:
- FR-A- 2 118 001
- JP-A- 4 180 922
- JP-A- 5 009 256
- JP-A- 5 039 338
- JP-A- 5 059 674
- JP-A-50 048 061
- JP-A-58 045 221
- JP-B-56 013 832
- US-A- 5 159 051
- PATENT ABSTRACTS OF JAPAN vol. 17, no. 119 (C-1034) 12 March 1993 & JP-A-43 000 368 (KURARAY) 23 October 1992

## Description

### Technical Field

The present invention relates to a polyurethane having excellent dyeability and a leather-like sheet utilizing the polyurethane. More specifically, the present invention relates to a polyurethane having excellent mechanical properties, durability and like properties and good processability and being dyeable with acid dyes, and to a leather-like sheet utilizing the polyurethane and being dyeable with acid dyes.

### Background Art

Polyurethanes have excellent mechanical properties. Leather-like sheets utilizing polyurethane are used in various applications. These sheets are obtained either by permitting a fibrous base to be impregnated and/or applied with a polyurethane solution, followed by conducting dry or wet coagulation of the solution, or further applying a surface coating layer of a polyurethane skin layer to a fibrous base to which a polymer liquid has been applied and solidified. However, conventional polyurethane resins have no dyeable sites required for dyeing with acid dyes or cationic dyes and have therefore been undyeable with these dyes. Although the polyurethane resins are dyeable with disperse dyes, the dyes can hardly be retained in the resins due to looseness of the amorphous structure of polyurethanes, resulting in very poor color fastness. Thus, the polyurethanes once dyed with disperse dyes readily undergo color dropping off or fading away and have not been usable for practical purposes.

In order to improve the above drawback, introduction of dyeable sites into polyurethane resins has been attempted. It is known that use of a chain extender of a low molecular weight compound having a tertiary nitrogen atom or piperazine ring makes a polyurethane dyeable with acid dyes.

For example, Japanese Patent Application Laid-open No. 55995/1973 and Japanese Patent Publication No. 16386 /1969 disclose that completion of reaction of unreacted isocyanate groups by using a monofunctional alcohol or amine having in the molecule thereof a tertiary or quaternary nitrogen atom realizes production of a dyeable polyurethane.

However, the monoufunctional alcohol or amine used in the above process is introduced into the terminal of the polyurethane molecules. Then, use of a large amount of the alcohol or amine to increase the dyeability decreases the molecular weight of the resulting polyurethane, resulting in too low a viscosity of the polyurethane solution. As a result, the polyurethane has poor processability and mechanical properties. If the molecular weight of the polyurethane is increased up to a level achieving satisfactory mechanical properties and processability (solution viscosity), it will become impossible to introduce a monobasic alcohol or amine in an amount satisfactory for assuring sufficient dyeable sites. Accordingly, this process has been rather difficult to use on a commercial scale.

Japanese Patent Application Laid-open No. 22602/1973 discloses a process for producing a man-made leather which, allegedly, has excellent dyeability, lightfastness and functionality. According to the laid-open, the process uses a polyurethane synthesized from an N-substituted diethanolamine represented by the general formula 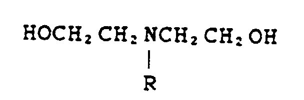 wherein R is an aliphatic alkyl group,
an aromatic or aliphatic diisocyanate and a polyester glycol or polyether glycol having a molecular weight of 500 to 5,000 and at least 2 active hydrogen atoms in the molecule thereof.

However, this process uses as a chain extender an N-substituted diethanolamine, represented by the above general formula and thus having a branched molecular structure, which should exert a steric hindrance effect to hinder formation of firm hard segments. As a result, the resulting polyurethane has not only poor mechanical properties but also poor resistance to heat, solvent and the like, thereby becoming completely unfit for application to man-made leathers.

In addition, if the above glycol having a molecular weight of 500 to 5,000, that is essential for constituting polyurethane, is a polyether glycol, the resulting polyurethane can be only poorly wet coagulatable, thereby hardly giving a man-made leather with good hand. If the above glycol is a polyester glycol, an N-substituted diethanolamine, used in a sufficient amount to achieve good dyeability, will bitterly deteriorate the polyester glycol. In this case, the N-substituted diethanolamine may be used in a small amount in order to suppress the deterioration, with the resulting dyeability being insufficient. Accordingly, this process has been hardly applicable on a commercial scale.

Japanese Patent Publication No. 19189/1972 discloses a process for producing polyurethanes having good dyeability, which comprises reacting a polymeric isocyanate compound having terminal isocyanate groups with a chain extender containing 5 to 50 mole% of a compound represented by the general formula 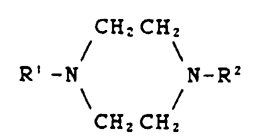 wherein R¹ and R² each represents a hydrogen, -CH₂CH₂NH₂ or-CH₂CH₂CH₂NH₂.

The publication states that this process is applicable to polyester- and polyether-based isocyanate compounds and that the obtained polyurethanes are dyeable with acid dyes, to say nothing of disperse dyes, thus showing its superiority.

However, the polyurethanes obtained by the process of the publication have as part of the chain extender used an N-substituted diethanolamine having ring structure and a diol. Since such a chain extender exerts a steric hindrance effect, thereby hindering formation of firm hard segments, the resulting polyurethanes have not only poor mechanical properties but also poor resistance to heat, solvent and the like, thereby becoming completely unfit for application to man-made leathers. In addition, if the glycol having a molecular weight of 500 to 5,000, that is essential for constituting polyurethane, is a polyether glycol, the resulting polyurethane can be only poorly wet coagulatable, thereby hardly giving a man-made leather with good hand. If the above glycol is a polyester glycol, an N-substituted compound, used in a sufficient amount to achieve good dyeability, will bitterly deteriorate the polyester glycol. In this case, the N-substituted compound may be used in a small amount in order to suppress the deterioration, with the resulting dyeability being insufficient. Accordingly, this process has been hardly applicable on a commercial scale.

Japanese Patent Publication No. 11651/1966 discloses an elastic filament comprising a polyurethane obtained by reacting a linear polyhydroxyl copound having terminal hydroxyl groups, an excess amount of a diisocyanate and a chain extender comprising a diamine, hydrazine, hydrazide or a mixture of the foregoing and containing units represented by the following formula: 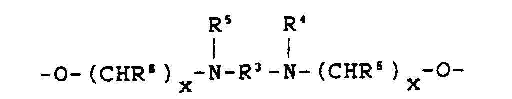 wherein R³ means a linear or branched alkylene chain having 2 to 12 carbon atoms, R⁴ means an alkyl group, R⁵ means an alkyl group or an alkylene group formed in combination with R⁴, R⁶ means an alkyl group and X means an integer of 2 to 6. This polyurethane is not satisfactory either.

As an attempt to prevent deterioration in the properties of polyurethanes due to introduction of a tertiary amino group-containing compound, Japanese Patent Publication No. 17237/1975 discloses a process for producing dyeable polyurethane elastic bodies, which comprises, in producing a polyurethane elastic body from an organic polyisocyanate, a high molecular weight polyhydroxy compound and a multifunctional low molecular weight compound, conducting block copolymerization by adding a semi-polymer having terminal hydroxyl groups and obtained by reacting an organic diisocyanate, a diol having a tertiary nitrogen atom and at least 7 mole% of the diol of a high molecular weight polyhydroxy compound.

The publication states that the polyurethanes obtained by the process can be provided with good dyeability with no influence on the properties of the resulting elastic filament and insists the superiority of the polyurethanes.

However, the process according to the publication requires a too complex preparation steps, since a diol having a tertiary nitrogen atom is, via a semi-polymer having terminal hydroxyl groups and obtained by reacting therewith a high molecular weight polyhydroxy compound, subjected to formation reaction of polyurethane. This complexity of the process requires a large amount of work to control, which obstructs commercial utilization of the process. In addition, the obtained polyurethanes have a large dispersion in quality, and leather-like sheets obtained therefrom sometimes have stiff hand and lack surface smoothness, thus being commercially unsatisfactory.

Japanese Patent Application Laid-open Nos. 178416/1992 and 178417/1992 disclose a process for producing polyurethane resins, which comprises reacting a macromonomer (A) obtained by subjecting a monomer having a radical polymerizable unsaturated bond to radical polymerization in the presence of a mercaptan-based chain transfer agent having at least 2 hydroxyl groups and one mercapto group, a polyol (B) and a polyisocyanate (C); and a polyurethane resin composition comprising the obtained polyurethane resin. These laid-open applications mention, as examples of the mercaptan-based chain transfer agent having at least 2 hydroxyl groups and one mercapto group and monomer having a radical polymerizable unsaturated bond, 3-mercapto-1,2-propanediol and (meth)acrylates containing a tertiary amino group such as dimethylaminomethyl(ethyl) (meth)acrylate, respectively. The laid-open applications allege the superiority of the obtained polyurethane while showing that it has good adhesiveness to steel plate.

However, the polyurethane resins obtained by the process of said laid-open applications, with which the viscosity does not sufficiently elevate upon polymerization and the properties such as resistance to heat and cold and strength are not sufficiently balanced with each other, have been unapplicable to preparation of man-made leather-like sheets, being usable as adhesives though. This is considered to be perhaps due to that the reaction is conducted while not following a specified sequence, or that components in the resin do not have controlled sequence structure.

Accordingly, an object of the present invention is to provide a leather-like sheet having a soft hand and excellent durability and being dyeable with acid dyes, the sheet utilizing a polyurethane resin which is provided with improved dyeability by introduction of dyeable sites for acid dyes and usable on a commercial scale.

### Disclosure of Invention

The present invention provides a polyurethane obtained by reacting:
an intermediate product diol (D) with both ends thereof substantially being OH and obtained by reacting a tertiary amino group-containing diol (A), a polymer diol (B) having a number average molecular weight of 500 to 3,000 selected from the group consisting of polyesters, polycarbonates, polylactones and polyethers and an organic diisocyanate (C1), in such stoichiometric amounts as to make the molar ratio of NCO/OH 0.5 to 0.99,
a low molecular weight diol (E), and
diphenylmethane-4,4'-diisocyanate (C2).

The present invention further provides a leather-like sheet comprising the above polyurethane and a fibrous base.

### Best Mode for Carrying Out the Invention

In the present invention, in order to improve the dyeability of polyurethane, a tertiary amino group-containing diol (A), which will play the role of a dyeable site, is introduced, not into the hard segments (chain extender) or the molecular terminals of the polyurethane, but into an intermediate product diol (D) that forms the soft segments. As a result, it becomes possible to introduce a required amount of dyeable sites without adversely affecting the molecular weight or crystallinity of hard segments of the resulting polyurethane. Accordingly, there is no particular limitation to the amount incorporated of the tertiary amino group-containing diol (A). The incorporation amount also varies depending on the molecular structure, the desired dyeability, dyes to be used and like factors, but it is desirably in an amount of tertiary amino group of 1 to 1,000µ eq/g based on the polyurethane, more preferably 1.5 to 500µ eq/g and most preferably 2 to 200µ eq/g on the same basis.

Examples of the tertiary amino group-containing diol (A) are as follows. 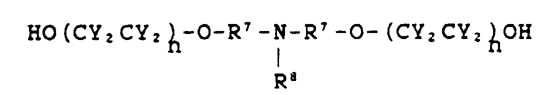 wherein Y is H or a lower alkyl group having 1 to 6 carbon atomes, R⁷, which may be the same or different, is a lower alkylene group having 2 to 6 carbon atoms, R⁸ is a lower alkyl group having 1 to 6 carbon atoms or a phenyl group and n is an integer of 1 to 10, 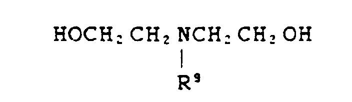 wherein R⁹ is an aliphatic alkyl group or phenyl group, 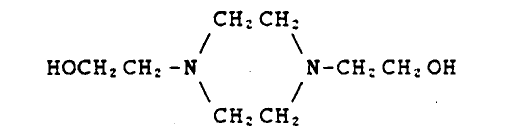 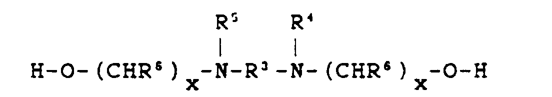 wherein R³ is a linear or branched alkylene chain having 2 to 12 carbon atoms, R⁴ is an alkyl group, R⁵ is an alkyl group or an alkylene group formed in combination with R⁴, R⁶ is an alkyl group and X is an integer of 2 to 6.

Further in the present invention, there can be used as the tertiary amino group-containing diol (A) one obtained by subjecting a tertiary amino group-containing acrylic acid and/or methacrylic acid alkyl ester to radical polymerization in the presence of a compound having 2 hydroxyl groups and one thiol group.

This type tertiary amino group-containing diols are obtained by any one of known processes. For instance, a tertiary amino group-containing acrylic acid and/or methacrylic acid alkyl ester monomer, such as diisopropylaminoethyl mechacrylate, t-butylmethylaminoethyl mechacrylate, 2(di-n-propylamino)-1-methylethyl dimethylaminoethyl mechacrylate, mechacrylate, diisopropylaminoethyl acrylate, t-butylmethylaminoethyl acrylate, 2(di-n-propylamino)-1-methylethyl acrylate or dimethylaminoethyl acrylate, is, in combination with, for example, 3-mercapto-1,2-propanediol, polymerized in the presence of azobisisobutyronitrile, azobisisovaleronitrile, benzoyl peroxide or like initiators. On this occasion, methacrylates or acrylates that contain no perfluoroalkyl, e.g. butyl acrylate, methyl methacrylate, butyl methacrylate and ethyl acrylate or, further, other copolymerizable vinyl monomers may be used in combination, within limits not to impair the purpose of the present. invention.

There is no particular limitation to the molecular weight of the tertiary amino group-containing diol (A) used, but it is desirably in a range of 400 to 20,000, more preferably 500 to 4,000, depending on the monomer used though. If the molecular weight is too high, exceeding 20,000, there will sometimes tend to form polymers having no hydroxyl group, which is not effectively used in the resulting polyurethane, and become a trouble in carrying out commercial production.

The polymer diol (B) used in the present invention is selected from the group consisting of polyesters, polycarbonates, polylactones and polyethers. The polymer diol (B) has a number average molecular weight in a range of 500 to 3,000 and preferably in a range of 700 to 2,500. With a molecular weight of less than 500, the resulting polyurethane tends to be of reduced softness or of poor heat resistance. With the molecular weight exceeding 3,000, which necessarily decreases the urethane group concentration, it is difficult to obtain a polyurethane resin having well-balanced characteristics of mechanical properties, flexibility, resistance to coldness and heat and durability and, besides, commercial production of such a polymer diol itself has some problems. Low molecular weight diols having a molecular weight of less than 500 may be used admixedly within limits not to impair the purpose of the present invention. However, it is not desirable that low molecular weight linear diols, such as ethylene glycol, butanediol and hexanediol and aromatic diols such as xylilene glycol, that are generally used as chain extenders, be substantially contained, in view of the mechanical properties, flexibility, resistance to coldness and like properties of the resulting polyurethane.

Polycarbonate diols can be obtained, for example, by reacting a carbonate with a diol. Examples of carbonates usable for this purpose are dimethyl carbonate, diphenyl carbonate and ethylene carbonate. Examples of usable diols are aliphatic diols, e.g. ethylene glycol, propylene glycol, butanediol, neopentyl glycol, metnylpentanediol, hexanediol, heptanediol, octanediol, nonanediol, decanediol and dodecanediol, which diols may be substituted with a lower alcohol; alicyclic diols, e.g. cyclohexanediol and hydrogenated xylilene glycol and aromatic diols such as xylilene glycol. These diols may be used singly or in combination of 2 or more. Among these diols, aliphatic diols, in particular those having 4 to 9 carbon atoms, e.g. butanediol, methylpentanediol, hexanediol, heptanediol, methyloctanediol and nonanediol are preferably used, either singly or in combination of 2 or more.

The polyester diols usable in the present invention are obtained, for example, by reacting a dibasic acid with a diol. Examples of dibasic acids usable for this purpose are aliphatic dibasic acids, e.g. succinic acid, glutaric acid, adipic acid, pimelic acid, suberic acid, azelaic acid, sebacic acid and brassylic acid and aromatic dibasic acids, e.g. isophthalic acid, terephthalic acid and naphthalene-dicarboxylic acid. These dibasic acids may be used singly or in combination of 2 or more. Among these dibasic acids, aliphatic ones, in particular those having 4 to 8 methylene chain carbon atoms, such as adipic acid, pimelic acid, suberic acid, azelaic acid and sebacic acid are preferred. Examples of usable diols are aliphatic diols, e.g. ethylene glycol, propylene glycol, butanediol, neopentyl glycol, methylpentanediol, hexanediol, heptanediol, octanediol, nonanediol, decanediol and dodecanediol, which diols may be substituted with a lower alcohol; alicyclic diols, e.g. cyclohexanediol and hydrogenated xylilene glycol and aromatic diols such as xylilene glycol. These diols may be used singly or in combination of 2 or more. Among these diols, aliphatic diols, in particular those having 4 to 9 carbon atoms, e.g. butanediol, methylpentanediol, hexanediol, heptanediol, methyloctanediol and nonanediol are preferably used, either singly or in combination of 2 or more.

Examples of usable polylactone diols are poly-ε-caprolactonediol, poly-trimethyl-ε-caprolactonediol and poly-β-methyl-δ-valerolactonediol.

Examples of usable polyether diols are polytetramethylene glycol, polypropylene glycol and polyethylene glycol.

Examples of the organic diisocyanate (C1) used in the invention are aromatic diisocyanates, e.g. dipheneylmethane-4,4'-diisocyanate, 2,4- or 2,6-tolylene diisocyanate, m- or p-phenylene diisocyanate and 1,5-naphthylene diisocyanate and non-aromatic diisocyanates, e.g. isophorone diisocyanate, cyclohexane diisocyanate, xylilene diisocyanate, hexamethylene diisocyanate and hydrogenated diphenylmethane-4,4'-diisocyanate. Among these diisocyanates, dipheneylmethane-4,4'-diisocyanate, isophorone diisocyanate and 2,4-or 2,6-tolylene diisocyanate are particularly preferred, since the resulting sheet materials obtained after coagulation with a non-solvent for the resulting polyurethane have good surface appearance and hand.

The intermediate product diol (D) with its ends substantially being OH used in the invention substantially constitutes the soft segments of the resulting polyurethane.

The diol (D) is obtained by reacting component (A), a polymer diol (B) and an organic diisocyanate (C1) in such a molar ratio as to make the equivalent ratio NCO/OH be in a ratio of 0.5 to 0.99. If the ratio NCO/OH is less than 0.5, the resulting leather-like sheet will hardly be provided with well-balanced characteristics of surface slimy touch, hand, flexibility, resistance to cold and heat resistance, so that the effect of the present invention cannot be produced sufficiently. This is considered to be due to too small an amount of urethane bonds incorporated into the intermediate product diol with its ends substantially being OH and, further, to too low a molecular weight of the intermediate product diol (D), although this tendency varies depending on the amount of component (A) incorporated, the molecular weight of the polymer diol (B) and type of the organic diisocyanate (C1). If the ratio NCO/OH exceeds 0.99, the resulting leather-like sheet will hardly be provided with well-balanced characteristics of surface quality, hand, flexibility, resistance to cold and heat resistance. This is attributable to too large an amount of urethane bonds incorporated into the intermediate product diol with its ends substantially being OH or to too high a molecular weight of the intermediate product diol (D), although this tendency varies depending on the amount of component (A) incorporated, the molecular weight of the polymer diol (B) and type of the organic diisocyanate (C1).

Examples of low molecular weight diols (E) usable in the present invention are aliphatic diols, e.g. ethylene glycol, propylene glycol, butanediol, neopentyl glycol, methylpentanediol, hexanediol, heptanediol, octanediol, nonanediol, decanediol and dodecanediol, which diols may be substituted with a lower alcohol; alicyclic diols, e.g. cyclohexanediol and hydrogenated xylilene glycol, aromatic diols such as xylilene glycol; and diethylene glycol. These diols may be used singly or in combination of 2 or more. Among these diols, aliphatic diols, in particular ethylene glycol and butanediol are preferably used, in view of achievement of good balance between the hand, flexibility, resistance to coldness and heat and like properties.

Although there is no particular limitation to the amount of the low molecular weight diol (E) used, it is often desirably in a range of molar ratio of (E)/(B), i.e. based on polymer diol (B), of 0.5 to 7.0, in particular in a range of 1.0 to 5.5, in view of achievement of good hand, flexibility and resistance to coldness and heat. However, the preferred range differs depending on the amount of component (A) incorporated, the molecular weight of the polymer diol (B), the type of the organic diisocyanate (C1) and the NCO/OH ratio.

Although there is no particular limitation to the amount of diphenylmethane-4,4'-diisocyanate used, the molar ratio of NCO/OH, i.e. the molar ratio between NCO from (C1) and (C2) and OH from the amino group-containing diol (A), polymer diol (B) and low molecular weight diol (D) is de'sirably in a range of 0.95 to 1.2, more preferably in a range of 0.97 to 1.1. However, the preferred range differs depending on the intended viscosity of the polyurethane solution, the molecular weights of the amino group-containing diol (A) and polymer diol (B), the molar ratio NCO/OH of the amino group-containing diol (A) , polymer diol (B) and organic diisocyanate (C1), the water content in the reaction solvent used, polymer diol (B) and low molecular weight diol (D), and like factors.

While no catalyst is necessarily used upon conducting polymerization process used in the present invention, it is possible to use an optional catalyst selected from known ones used for producing ordinary polyurethanes, e.g. metal compounds such as titanium tetraisopropoxide, dibutyltin dilaurate and tin octate and tertiary amines such as tetramethylbutanediamine and 1,4-diaza(2,2,2)bicyclooctane.

The usual solvents are usable for the polyurethanes obtained by the process of the present invention, and their examples are dimethylformamide, dimethylacetamide, N-methylpyrrolidone, toluene, ethyl acetate, methyl ethyl ketone and tetrahydrofuran.

The polyurethanes obtained by the process according to the present invention may, upon use, incorporate various additives usable for conventional polyurethanes, e.g. flame retardants such as phosphorus-based compounds, halogen-containing compounds, antioxidants, UV-absorbers, pigments, dyes, plasticizers and surfactants.

The fibrous base used for the leather-like sheet according to the present invention need not comprise dyed fibers where the sheet is a grain type one having on the surface of the base a surface layer of the above polyurethane, and in this case its constituting fibers are not restricted to those dyeable with acid dyes. However, the constituting fibers are preferably dyeable with acid dyes, to prevent generation of any heterocolor feeling in the cross-section of the leather-like sheet. For suede-type leather-like sheets with raised fibers, the fibrous base may comprise any fibers dyeable with acid dyes and, thus, be any one of knit, woven and nonwoven fabrics formed of synthetic fibers such as polyamide fibers or tertiary amino group-modified polyester fibers or natural fibers such as wool and nonwoven fabric formed of 3-dimensionally entangled bundles of ultrafine fibers having an average fineness of less than 0.1 denier. Among these, nonwoven fabrics formed of 3-dimensionally entangled bundles of ultrafine fibers having an average fineness of less than 0.1 denier, more particularly 0.005 to 0.1 denier, are preferably used. Ultafine fibers dyeable with acid dyes can be derived from known polyamide ultrafine fiber-generating fibers comprising at least 2 polymer components including polyamide. The polyamide resin used for the polyamide ultrafine fiber-generating fiber is at least one member selected from the group consisting of 6-nylon, 6,6-nylon, 6,10-nylon, 12-nylon and spinnable polyamides having aromatic rings.

The counterpart polymer to constitute, in combination with polyamide, the ultrafine fiber-generating fiber should differ from the polyamide resin used in solubility or decomposability in the solvent or decomposing agent used, have poor compatibility with the polyamide resin and have a smaller melt viscosity than that of the polyamide resin under the spinning conditions employed. Any polymer satisfying the above requirements can be used and is selected for example from polyethylene, polypropylene, ethylene-propylene copolymer, ethylene-vinyl acetate copolymer, ethylene-acrylic acid ester copolymers, ethylene-α-olefin copolymers, polystyrene, styrene-isoprene copolymer, hydrogenated product of styrene-isoprene copolymer, styrene-butadiene copolymer and hydrogenated product of styrene-butadiene copolymer. The selected polymer and a polyamide are blend-spun by any one of: a process which comprises mixing the two polymers in a prescribed mixing ratio, melting the mix in the same melting zone to obtain a mixed system and spinning the mixed system; one which comprises melting the two polymers in separate melting zones, subjecting the two melts to joining and dividing operation in the spinning head part repeatedly for several times; and one which comprises melting the two polymers in separate melting zones and spinning the two melts while specifying the fiber configuration at the spinneret part. Then, there can be obtained polyamide ultrafine fiber-generating fibers having a polyamide resin content of 40 to 80% by weight, and having therein at least 5 units, preferably 50 to 800 units, of polyamide ultrafine fibers. The ultrafine fiber-generating fibers thus spun are, as required, subjected to the usual fiber treatment process such as drawing and heat setting, to give fibers having a fineness of 2 to 15 deniers and an average polyamide ultrafine fiber fineness (calculated value) of not more than 0.2 denier, preferably 0.005 to 0.1 denier.

The ultrafine fiber-generating fibers are carded into a web, which is then formed into a random web or cross-lapped web through a webber. The web thus obtained is laminated to achieve the desired weight and thickness and, thereafter, subjected to fiber entanglement treatment by needle punching, water jetting, air jetting or like known processes, into a fiber-entangled nonwoven fabric.

The nonwoven fabric thus formed is impregnated and/or coated with, a composition liquid obtained by adding to a solution of the polyurethane obtained above, as required, a coagulation adjusting agent, release agent, plasticizer, stabilizer, antioxidant, UV-absorber, colorant and like additives. The fabric with the liquid is then subjected to wet or dry coagulation. The ultrafine fiber-generating fibers are, prior to or after the above impregnation or coating, treated with a solvent that can dissolve the counterpart resin and is a nonsolvent for the polyamide used, to give bundles of ultrafine fibers.

There is no particular limitation to the amount of the polyurethane resin to be contained in the finished sheet, but it is generally 10 to 60% by weight, in particular 15 to 45%. With the polyurethane content being too small, the sheet somewhat has a weak, hand lacking KOSHI (stiffness), which becomes more noticeable when the content is less than 10%. On the other hand, with too large a polyurethane content, the sheet tends to have a poor hand with little bulk, which becomes more marked when the content exceeds 60%.

The sheet thus obtained is, as necessary, further coated on the surface thereof with a porous or non-porous coating layer of the same polyurethane, to give a grain type leather-like sheet; or subjected to a napping treatment on at least one surface thereof, to give a raised-fiber suede-type leather-like sheet. If necessary, the sheet can be sliced in the thickness direction at any optional stage, to a desired thickness.

The leather-like sheets thus obtained according to the present invention are useful for various items, e.g. clothing, shoes, bags, furniture, car interior, sundries and the like. The leather-like sheets have excellent hand, with the polyurethane resin maintaining the desirable mechanical properties and processability and being dyeable with what are known as acid dyes, such as acid dyes and metal-complex dyes. The mechanism involved herein is not quite clear, but it is considered to be due to the following. The polyurethane is obtained via an intermediate product diol (D) with both ends thereof substantially being OH and obtained by reacting a tertiary amino group-containing diol (A), a polymer diol (B) having a number average molecular weight of 500 to 3,000 and essentially comprising a polycarbonate and an organic diisocyanate (C1), in such stoichiometric amounts as to make the molar ratio of NCO/OH 0.5 to 0.99, and a low molecular weight diol (E); and hence tertiary amino groups that can accept acid dyes are introduced therein while soft segments and hard segments constituting the polyurethane maintain a state of desirable micro-phase separation. This can give the leather-like sheets impregnated or coated with the very polyurethane the above desirable characteristics.

Other features of the invention will become apparent in the course of the following descriptions of exemplary embodiments which are given for illustration of the invention and are not intended to be limiting thereof.

In the Examples and Comparative Examples that follow, various compounds are sometimes abbreviated as follows.
- MDEA: N-methyldiethanolamine
- HEP: 1,4bis(2-hydroxyethyl)piperazine
- EBDO: polymer diol having an average molecular weight of 2,000 and obtained by reacting a 1/1 mixture of dimethylaminoethyl acrylate and butyl acrylate, and 3-mercapto-1,2-propanediol
- EEDO: polymer diol having an average molecular weight of 2,000 and obtained by reacting a 1/2 mixture of diethylaminoethyl methacrylate and 2-ethyl-hexylmethacrylate, and 3-mercapto-1,2-propanediol
- PHC₁₀₀₀: polyhexylene carbonate having an average molecular weight of 1,000
- PHC₂₀₀₀: polyhexylene carbonate having an average molecular weight of 2,000
- PBA₁₀₀₀: polybutylene adipate having an average molecular weight of 1,000
- PBA₂₀₀₀: polybutylene adipate having an average molecular weight of 2,000
- PTMG₂₀₀₀: polytetramethylene glycol having an average molecular weight of 2,000
- MDI: diphenylmethane-4,4'-diisocyanate
- TDI: 80/20 by weight mixture of 2,4-tolylene diisocyanate and 2,6-tolylene diisocyanate
- EG: ethylene glycol
- DMF: dimethylformamide

### Example 1

A reaction vessel was charged with 11.9 parts by weight of MDEA as a tertiary amino group-containing diol (A), 620 parts by weight of PHC₂₀₀₀, 580 parts by weight of PBA₂₀₀₀ and 600 parts by weight of PTMG₂₀₀₀, as a polymer diol (B), 1188 parts by weight of MDI as an organic diisocyanate (C1), (NCO/OH = 0.75), and 9117 parts by weight of DMF. The mixture was reacted at a temperature of 70°C under an atmosphere of nitrogen for 5 hours, to give an intermediate product. Disappearance of isocyanate groups was confirmed. The intermediate product was tested by GPC for weight average molecular weight (as converted into polystyrene), which was found to be 40,000.

To a solution of the thus obtained intermediate product diol (D) in DMF, there were added 186 parts by weight of EG as a low molecular weight diol (E) and 853 parts by weight of MDI (C2), and the mixture was reacted to give a solution of a polyurethane having a weight average molecular weight of 360,000 in a concentration of 25%. A composition liquid for impregnation was prepared by adding to 100 parts by weight of the thus obtained polyurethane solution 92 parts by weight of DMF, 1.5 parts by weight of CRISVON ASSISTOR SD7 (trade name; Dainippon Ink & Chemicals, Inc.) and 1.5 parts by weight of CRISVON ASSISTOR SD14 (trade name; Dainippon Ink & Chemicals, Inc.).

Separately, a web was formed by carding ultrafine fiber-generating fibers (ultrafine fiber component: 6-nylon) obtained by melt blend spinning of 60 parts by weight of 6-nylon and 40 parts by weight of a highly flowable polyethylene. The web was formed into a needle-punched entangled nonwoven fabric. The nonwoven fabric was impregnated with the composition liquid prepared above and then immersed in a 25% aqueous DMF solution to effect coagulation. The nonwoven fabric with the resin was treated in hot toluene to dissolve off the polyethylene component of the fibers, to give a sheet having a thickness of 1.4 mm. The sheet thus obtained was sliced into two parts, each of which was buffed with a sandpaper on the sliced surface to a thickness of 0.56 mm. Then the coagulated surface was treated with an Emery buffer to form a nap.

The sheet with a napped surface was dyed under the following conditions, to give a leather-like sheet dyed in a bright color and having a good hand. The dyed leather-like sheet showed a color fastness, that to washing and that to rubbing, of both at least class 5, which were excellent.

| | |
|---|---|
| Dye | Kayacyl Blue HRL |
| Dye concentration | 5.0 g/l |
| Ammonium acetate | 0.6 g/l |
| Formic acid | 1.0 g/l |
| Bath ratio | 50:1 |

### Example 2 and Comparative Examples 1 and 2

The procedure of Example 1 was followed except that the starting material composition was changed as shown in Table 1, to obtain 25% polyurethane solutions.

Dyed leather-like sheets with a napped surface were obtained by using the polyurethane solutions in the same manner as in Example 1, and evaluated in the same manner.

Although fibrous base part of the sheet obtained in Comparative Example 1 had been dyed to some level, the polyurethane part had been dyed only insufficiently, whereby the entire sheet had a poor appearance. Comparison with the results of Example 1 clearly shows the good effect of using a tertiary amino group-containing diol (A) according to the present invention.

The sheet obtained in Example 2 showed a bright color and gave a good hand.

On the other hand, in Comparative Example 2, the sheet after being treated in hot toluene to dissolve off polyethylene component was too stiff and had a too coarse touch to be called a leather-like sheet.

Thus, the use of the polyurethane obtained via an intermediate product obtained by reacting a tertiary amino group-containing diol (A), a polymer diol (B) and an organic diisocyanate (C1) in a molar ratio of NCO/OH of 0.2 could not yield a sheet having a good hand. This fact clearly shows, upon comparison with the results of Example 2, the superiority of the technique according to the present invention, which uses a polyurethane obtained via an intermediate product (D) obtained by reacting a tertiary amino group-containing diol (A), a polymer diol (B) and an organic diisocyanate (C1) in a molar ratio of NCO/OH of at least 0.5.

### Comparative Example 3

A reaction vessel was charged, at the same time, with staring materials with the same composition as that in Example 2, and the mixture was reacted at 80°C under an atmosphere of nitrogen for 8 hours, to give a solution of a polyurethane having an weight average molecular weight of 380,000 in a concentration of 25%. Thereafter, the procedure of Example 1 was followed except that the obtained polyurethane solution was used. However, the sheet after being treated in hot toluene to dissolve off polyethylene component was too stiff and had a too coarse touch to be called a leather-like sheet.

Thus, the use of the polyurethane obtained without via an intermediate product (D) obtained by reacting a tertiary amino group-containing diol (A), a polymer diol (B) and an organic diisocyanate (C1) could not yield a sheet having a good hand. This fact clearly shows, upon comparison with the results of Example 2, the superiority of the technique that uses a polyurethane obtained via an intermediate product (D) according to the present invention.

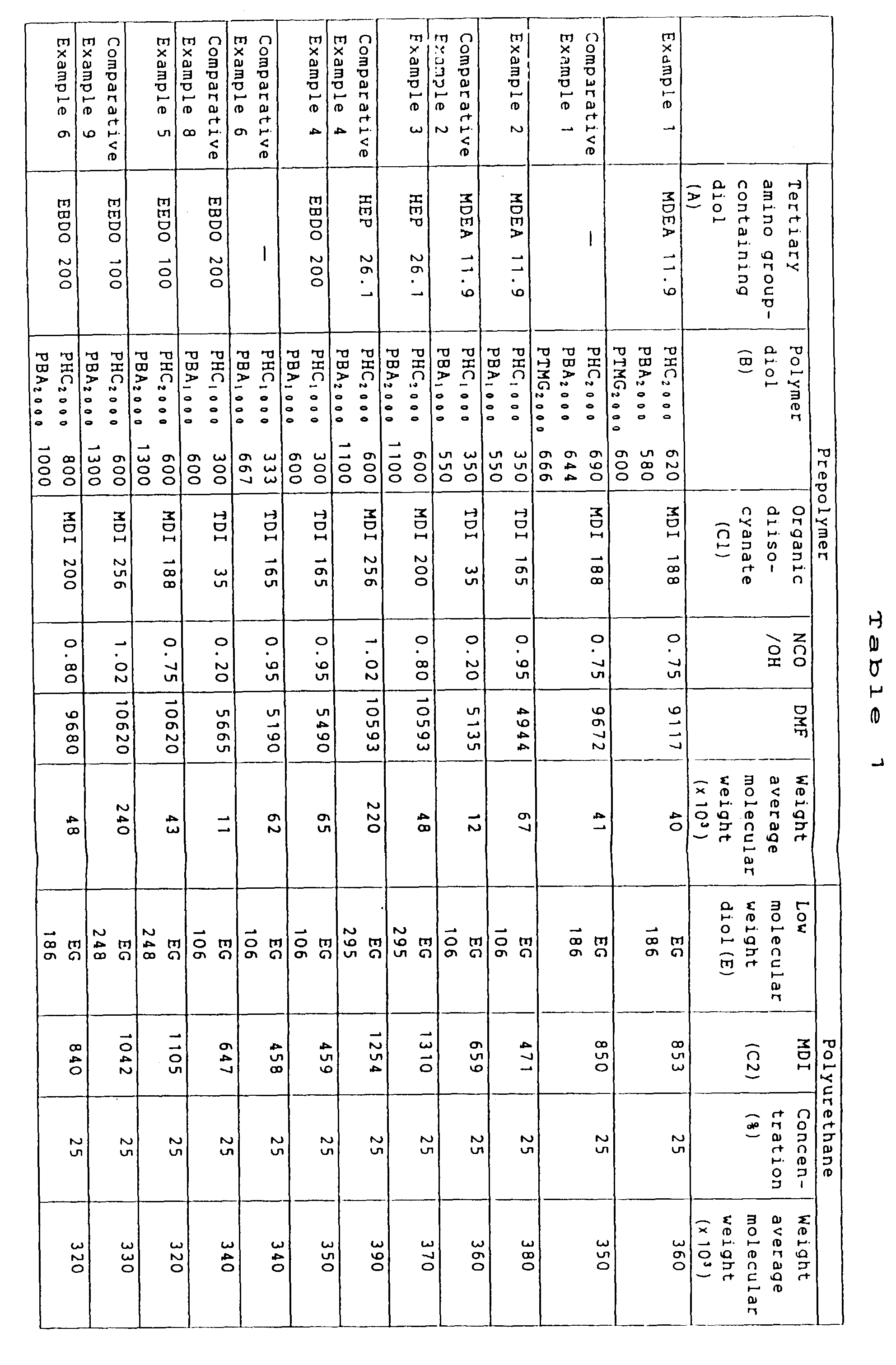

### Example 3 and Comparative Example 4

The procedure of Example 1 was followed except that the starting material composition was changed as shown in Table 1, to obtain 25% polyurethane solutions.

Composition liquids for coating were prepared by adding to 100 parts by weight of the thus obtained polyurethane solutions 19 parts by weight of DMF, 1.5 parts by weight of CRISVON ASSISTOR SD7 (trade name; Dainippon Ink & Chemicals, Inc.) and 1.5 parts by weight of CRISVON ASSISTOR SD14 (trade name; Dainippon Ink & Chemicals, Inc.).

The same entangled nonwoven fabric as used in Example 1 was, at first, impregnated with the composition liquid used in Example 1, then coated with the above coating liquids to a thickness of 0.5 mm and, thereafter, immersed in a 25% aqueous DMF solution to effect coagulation. The two nonwoven fabrics thus impregnated and coated were treated in hot toluene to dissolve off the polyethylene component of the fibers, to give two sheets with a grain surface and having a thickness of 2.2 mm and a good hand. These sheets were dyed in the same manner as in Example 1 and the dyed sheets were evaluated. While the sheet of Example 3 had been dyed in a bright color, that of Comparative Example 4 was stiff and had a poor hand with poorly foamed grain surface. Thus, the use of the polyurethane obtained via an intermediate product obtained by reacting a tertiary amino group-containing diol (A), a polymer diol (B) and an organic diisocyanate (C1) in a molar ratio of NCO/OH of 1.02 could not yield a sheet having a good hand. This fact clearly shows, upon comparison with the results of Example 3, the superiority of the technique according to the present invention, which uses a polyurethane obtained via an intermediate product (D) obtained by reacting a tertiary amino group-containing diol (A), a polymer diol (B) and an organic diisocyanate (C1) in a molar ratio of NCO/OH of not more than 0.99.

### Comparative Example 5

A reaction vessel was charged with 26.1 parts by weight of HEP, 50 parts by weight of PBA₂₀₀₀, 35 parts by weight of MD, (NCO/OH = 0.80), and 340 parts by weight of DMF, and the mixture was reacted at 80°C under an atmosphere of nitrogen for 5 hours, to give an intermediate product having a weight average molecular weight as converted into polystyrene of 60,000.

To the obtained solution of the intermediate product in DMF, there were added 600 parts by weight of PHC₂₀₀₀, 1,050 parts by weight of PBA₂₀₀₀, 1,475 parts by weight of MDI, 295 parts by weight of EG and 10,253 parts by weight of DMF, and the mixture was reacted to give a solution of a polyurethane having an weight average molecular weight of 360,000 in a concentration of 25%.

Thereafter, the procedure of Example 3 was followed except that the obtained polyurethane solution was used to prepare a coating solution, to obtain a grain-type sheet. The sheet, the grain surface having many minute projections, had a poor appearance and a stiff hand.

### Example 4 and Comparative Example 6

The procedure of Example 1 was followed except that the starting material composition was changed as shown in Table 1, to obtain 25% polyurethane solutions.

The procedure of Example 1 was followed with the obtained polyurethane solutions to prepare composition liquids for impregnation.

The same entangled nonwoven fabric as used in Example 1 was impregnated with each of these composition liquids separately, and then treated in the same manner as in Example 1, to give sheets having a napped surface.

The sheets with a napped surface were dyed under the following conditions and evaluated. The sheet of Example 4 was found to be a leather-like sheet dyed in a bright color and having a good hand. On the other hand, although the fibrous base part of the sheet obtained in Comparative Example 5 was dyed to some level, the polyurethane part was dyed only insufficiently, whereby the entire sheet had a poor appearance. Thus, the superiority of the present invention is clear.

| | |
|---|---|
| Dye | Acidol Brill. Blue BX-NW |
| Dye concentration | 3.0 g/l |
| Uniperol SE-S | 1.0 g/l |
| Acetic acid | 0.3 g/l |
| Bath ratio | 20:1 |
| Temperature | 95°C |
| Time | 60 minutes |

### Comparative Example 7

A reaction vessel was charged, at the same time, with staring materials with the same composition as that in Example 4, and the mixture was reacted at a prescribed temperature under an atmosphere of nitrogen for a prescribed time, to give a solution of a polyurethane having an weight average molecular weight of 330,000 in a concentration of 25%. Thereafter, the procedure of Example 4 was followed except that the obtained polyurethane solution was used, to prepare a composition liquid for impregnation.

The entangled nonwoven fabric was treated with this solution in the same manner. Then, it appeared that the sheet after being treated in hot toluene to dissolve off polyethylene component was too stiff and had a too coarse touch to be called a leather-like sheet. Thus, the use of the polyurethane obtained without via an intermediate product (D) obtained by reacting a tertiary amino group-containing diol (A), a polymer diol (B) and an organic diisocyanate (C1) could not yield a sheet having a good hand. This fact clearly shows, upon comparison with the results of Example 4, the superiority of the technique that uses a polyurethane obtained via an intermediate product (D) according to the present invention.

### Comparative Example 8

The procedure of Example 4 was followed except that the starting material composition was changed as shown in Table 1, to obtain a 25% solution of a polyurethane having a weight average molecular weight of 340,000.

Thereafter, the procedure of Example 4 was followed except that the obtained polyurethane solution was used, to prepare a composition liquid for impregnation.

The procedure of Example 4 was further followed except that the liquid for impregnation prepared above was used. Then, it turned out that the sheet after being treated in hot toluene to dissolve off polyethylene component was too stiff and had a too coarse touch to be called a leather-like sheet. Thus, the use of the polyurethane obtained via an intermediate product obtained by reacting a tertiary amino group-containing diol (A), a polymer diol (B) and an organic diisocyanate (C1) in a molar ratio of NCO/OH of 0.2 could not yield a sheet having a good hand. This fact clearly shows, upon comparison with the results of Example 4, the superiority of the technique that uses a polyurethane obtained via an intermediate product (D) obtained by reacting a tertiary amino group-containing diol (A), a polymer diol (B) and an organic diisocyanate (C1) in a molar ratio of NCO/OH of at least 0.5.

### Example 5

The procedure of Example 3 was followed except that the starting material composition was changed as shown in Table 1, to obtain a 25% solution of a polyurethane having a weight average molecular weight of 320,000.

A composition liquid for coating was prepared using the obtained polyurethane solution in the same manner as in Example 3.

The same entangled nonwoven fabric as used in Example 4 was, at first, impregnated with the composition liquid used in Example 4, then coated with the above coating liquid to a thickness of 0.5 mm prepared above and, thereafter, immersed in a 25% aqueous DMF solution to effect coagulation. The nonwoven fabric thus impregnated and coated was treated in hot toluene to dissolve off the polyethylene component of the fibers, to give a sheet with a grain surface and having a thickness of 2.2 mm and a good hand. The sheet was dyed in the same manner as in Example 4, to show a bright color, which clearly shows the superiority of the present invention.

### Comparative Example 9

The procedure of Example 5 was followed except that the starting material composition was changed as shown in Table 1, to obtain a 25% solution of a polyurethane having a weight average molecular weight of 330,000.

Thereafter, the procedure of Example 5 was followed except that the obtained polyurethane solution was used, to obtain a grain-type sheet. The sheet, the grain surface being poorly foamed, was stiff and had a poor hand. Thus, the use of the polyurethane obtained via an intermediate product obtained by reacting a tertiary amino group-containing diol (A), a polymer diol (B) and an organic diisocyanate (C1) in a molar ratio of NCO/OH of 1.02 could not yield a sheet having a good hand. This fact clearly shows, upon comparison with the results of Example 5, the superiority of the technique that uses a polyurethane obtained via an intermediate product (D) obtained by reacting a sulfonic acid group-containing diol (A), a polymer diol (B) and an organic diisocyanate (C1) in a molar ratio of NCO/OH of not more than 0.99.

### Example 6

The procedure of Example 1 was followed except that the starting material composition was changed as shown in Table 1, to obtain a 25% solution of a polyurethane having a weight average molecular weight of 320,000.

A composition liquid for impregnation was prepared using the obtained polyurethane solution in the same manner as in Example 1.

The same entangled nonwoven fabric as used in Example 4 was impregnated with the composition liquid and then immersed in a 25% aqueous DMF solution to effect coagulation. The nonwoven fabric thus impregnated was treated in hot toluene to dissolve off the polyethylene component, to give a sheet. The sheet had a hand sufficient for practical purposes, being somewhat stiff though. The sheet was dyed in the same manner as in Example 4, to show a bright color, which clearly shows the superiority of the present invention.

### Industrial Applicability

The leather-like sheets according to the present invention, using polyurethanes having excellent properties, such as mechanical characteristics and durability, as well as excellent processability, and being dyeable with acid dyes, are soft and of good hand and dyeable with what is known as acid dyes, such as acid dyes and metal complex dyes. The leather-like sheets, having excellent color development and durability, are useful for clothing, shoes, bags, furniture, car interior, sundries and like items.

## Claims

1. A polyurethane obtained by reacting:
an intermediate product diol (D) with both ends thereof substantially being OH and obtained by reacting a tertiary amino group-containing diol (A), a polymer diol (B) having a number average molecular weight of 500 to 3,000 selected from the group consisting of polyesters, polycarbonates, polylactones and polyethers and an organic diisocyanate (C1), in such stoichiometric amounts as to make the molar ratio of NCO/OH 0.5 to 0.99,
a diol (E) having a molecular weight of less than 500, and
diphenylmethane-4,4'-diisocyanate (C2).

2. A process for producing polyurethanes, which comprises reacting a tertiary amino group-containing diol (A), a polymer diol (B) having a number average molecular weight of 500 to 3,000 selected from the group consisting of polyesters, polycarbonates, polylactones and polyethers and an organic diisocyanate (C1), in such stoichiometric amounts as to make the molar ratio of NCO/OH 0.5 to 0.99, to obtain an intermediate product diol (D), and
reacting the intermediate product diol (D), a diol (E) having a molecular weight of less than 500 , and diphenylmethane-4,4'-diisocyanate (C2).

3. A leather-like sheet comprising:
a fibrous base and
a polyurethane obtained by reacting:
an intermediate product diol (D) with both ends thereof substantially being OH and obtained by reacting a tertiary amino group-containing diol (A), a polymer diol (B) having a number average molecular weight of 500 to 3,000 selected from the group consisting of polyesters, polycarbonates, polylactones and polyethers and an organic diisocyanate (C1), in such stoichiometric amounts as to make the molar ratio of NCO/OH 0.5 to 0.99,
a diol (E) having a molecular weight of less than 500, and
diphenylmethane-4,4'-diisocyanate (C2).

4. The polyurethane according to Claim 1, wherein said polymer diol (B) is a polyester obtained from an aliphatic dibasic acid having 4 to 8 methylene chain carbon atoms and an aliphatic diol having 4 to 9 main chain carbon atoms.

5. The polyurethane according to Claim 1, wherein said polymer diol (B) is a polycarbonate obtained from an aliphatic diol having a 4 to 9 main chain carbon atoms.

6. The polyurethane according to Claim 1, wherein said organic diisocyanate (C1) is at least one member selected from the group consisting of diphenylmethane-4,4'-diisocyanate, isophorone diisocyanate and 2,4- or 2,6-tolylene diisocyanate.

7. The process for producing polyurethanes according to Claim 2, wherein said polymer diol (B) is a polyester obtained from an aliphatic dibasic acid having 4 to 8 methylene chain carbon atoms and an aliphatic diol having 4 to 9 main chain carbon atoms.

8. The process for producing polyurethanes according to Claim 2, wherein said polymer diol (B) is a polycarbonate obtained from an aliphatic diol having 4 to 9 main chain carbon atoms.

9. The process for producing polyurethanes according to Claim 2, wherein said organic diisocyanate (C1) is at least one member selected from the group consisting of diphenylmethane-4,4'-diisocyanate, isophorone diisocyanate and 2,4- or 2,6-tolylene diisocyanate.

10. The leather-like sheet according to Claim 3, wherein said polymer diol (B) is a polyester obtained from an aliphatic dibasic acid having 4 to 8 methylene chain carbon atoms and an aliphatic diol having 4 to 9 main chain carbon atoms.

11. The leather-like sheet according to Claim 3, wherein said polymer diol (B) is a polycarbonate obtained from an aliphatic diol having a carbon chain length of 4 to 9.

12. The leather-like sheet according to Claim 3, wherein said organic diisocyanate (C1) is at least one member selected from the group consisting of diphenylmethane-4,4'-diisocyanate, isophorone diisocyanate and 2,4- or 2,6-tolylene diisocyanate.

## Patentansprüche

1. Polyurethan, das durch Umsetzen
eines Zwischenprodukt-Diols (D), dessen beide Enden im wesentlichen Hydroxygruppen sind und welches durch Umsetzen eines eine tertiäre Aminogruppe enthaltenden Diols (A), eines polymeren Diols (B) mit einem Zahlenmittel des Molekulargewichts von 500 bis 3000, welches aus der aus Polyestern, Polycarbonaten, Polylactonen und Polyethern bestehenden Gruppe ausgewählt ist, und eines organischen Diisocyanats (Cl) in solchen stöchiometrischen Mengen, daß das molare Verhältnis NCO/OH 0,5 bis 0,99 beträgt, gebildet wird,
eines Diols (E) mit einem Molekulargewicht von weniger als 500 und
von Diphenylmethan-4,4'-diisocyanat (C2) erhalten wird.

2. Verfahren zur Herstellung von Polyurethanen, welches das Umsetzen eines eine tertiäre Aminogruppe enthaltenden Diols (A), eines polymeren Diols (B) mit einem Zahlenmittel des Molekulargewichts von 500 bis 3000, welches aus der aus Polyestern, Polycarbonaten, Polylactonen und Polyethern bestehenden Gruppe ausgewählt ist, und eines organischen Diisocyanats (Cl) in solchen stöchiometrischen Mengen, daß das molare Verhältnis NCO/OH 0,5 bis 0,99 beträgt, unter Bildung eines Zwischenprodukt-Diols (D) und
das Umsetzen des Zwischenprodukt-Diols (D), eines Diols (E) mit einem Molekulargewicht von weniger als 500 und von Diphenylmethan-4,4'-diisocyanat (C2) umfaßt.

3. Lederähnliche Schicht, welche umfaßt:
ein Fasern enthaltendes Grundmaterial und
ein Polyurethan, das durch Umsetzen
eines Zwischenprodukt-Diols (D), dessen beide Enden im wesentlichen Hydroxygruppen sind und welches durch Umsetzen eines eine tertiäre Aminogruppe enthaltenden Diols (A), eines polymeren Diols (B) mit einem Zahlenmittel des Molekulargewichts von 500 bis 3000, welches aus der aus Polyestern, Polycarbonaten, Polylactonen und Polyethern bestehenden Gruppe ausgewählt ist, und eines organischen Diisocyanats (C1) in solchen stöchiometrischen Mengen, daß das molare Verhältnis NCO/OH 0,5 bis 0,99 beträgt, gebildet wurde,
eines Diols (E) mit einem Molekulargewicht von unter 500 und
eines Diphenylmethan-4,4'-diisocyanats (C2) erhalten wird.

4. Polyurethan gemäß Anspruch 1, worin das polymere Diol (B) ein Polyester ist, der aus einer aliphatischen dibasischen Säure mit 4 bis 8 Methylenketten-Kohlenstoffatomen und einem aliphatischen Diol mit 4 bis 9 Hauptketten-Kohlenstoffatomen erhalten wird.

5. Polyurethan gemäß Anspruch 1, worin das polymere Diol (B) ein Polycarbonat ist, das aus einem aliphatischen Diol mit 4 bis 9 Hauptketten-Kohlenstoffatomen erhalten wird.

6. Polyurethan gemäß Anspruch 1, worin das organische Diisocyanat (Cl) mindestens ein Mitglied aus der aus Diphenylmethan-4,4'-diisocyanat, Isophorondiisocyanat und 2,4-oder 2,6-Toluylendiisocyanat bestehenden Gruppe ist.

7. Verfahren zur Herstellung von Polyurethanen gemäß Anspruch 2, wobei das polymere Diol (B) ein Polyester ist, der aus einer aliphatischen dibasischen Säure mit 4 bis 8 Methylenketten-Kohlenstoffatomen und einem aliphatischen Diol mit 4 bis 9 Hauptketten-Kohlenstoffatomen erhalten wird.

8. Verfahren zur Herstellung von Polyurethanen gemäß Anspruch 2, wobei das polymere Diol (B) ein Polycarbonat ist, das aus einem aliphatischen Diol mit 4 bis 9 Hauptketten-Kohlenstoffatomen erhalten wird.

9. Verfahren zur Herstellung von Polyurethanen gemäß Anspruch 2, wobei das organische Diisocyanat (Cl) mindestens ein Mitglied ist, das aus der aus Diphenylmethan-4,4'-diisocyanat, Isophorondiisocyanat und 2,4- oder 2,6-Toluylendiisocyanat bestehenden Gruppe ausgewählt ist.

10. Lederähnliche Schicht gemäß Anspruch 3, wobei das polymere Diol (B) ein Polyester ist, der aus einer aliphatischen dibasischen Säure mit 4 bis 8 Methylenketten-Kohlenstoffatomen und einem aliphatischen Diol mit 4 bis 9 Hauptketten-Kohlenstoffatomen erhalten wird.

11. Lederähnliche Schicht gemäß Anspruch 3, wobei das polymere Diol (B) ein Polycarbonat ist, das aus einem aliphatischen Diol mit einer Kohlenstoffkettenlänge von 4 bis 9 erhalten wird.

12. Lederähnliche Schicht gemäß Anspruch 3, wobei das organische Diisocyanat (C1) mindestens ein Mitglied ist, das aus der aus Diphenylmethan-4,4'-diisocyanat, Isophorondiisocyanat und 2,4- oder 2,6-Toluylendiisocyanat bestehenden Gruppe ausgewählt ist.

## Revendications

1. Polyuréthane obtenu par réaction
d'un produit intermédiaire diol (D) dont les deux extrémités sont essentiellement OH et obtenu par réaction d'un diol (A) contenant des groupes amino tertiaire, d'un diol polymère (B) ayant une masse molaire moyenne en nombre de 500 à 3 000 choisi dans le groupe constitué par des polyesters, des polycarbonates, des polylactones et des polyéthers, et d'un diisocyanate organique (C1), en des quantités stoechiométriques telles que le rapport molaire NCO/OH est compris entre 0,5 et 0,99,
d'un diol (E) ayant une masse molaire inférieure à 500,
et du diphénylméthane-4,4'-diisocyanate (C2).

2. Procédé de production de polyuréthanes, qui comprend
la réaction d'un diol (A) contenant des groupes amino tertiaire, d'un diol polymère (B) ayant une masse molaire moyenne en nombre comprise entre 500 et 3 000, choisi dans le groupe constitué par des polyesters, des polycarbonates, des polylactones et des polyéthers, et d'un diisocyanate organique (C1), en des quantités stoechiométriques telles que le rapport molaire NCO/OH est compris entre 0,5 et 0,99, pour obtenir un produit intermédiaire diol (D), et
la réaction du produit intermédiaire diol (D), d'un diol (E) ayant une masse molaire inférieure à 500, et du diphénylméthane-4,4'-diisocyanate (C2).

3. Feuille de similicuir comprenant
un support fibreux et
un polyuréthane obtenu par réaction d'un produit intermédiaire diol (D) dont les deux extrémités sont essentiellement OH et obtenu par réaction d'un diol (A) contenant des groupes amino tertiaire, d'un diol polymère (B) ayant une masse molaire moyenne en nombre de 500 à 3 000 choisi dans le groupe constitué par des polyesters, des polycarbonates, des polylactones et des polyéthers, et d'un diisocyanate organique (Cl), en des quantités stoechiométriques telles que le rapport molaire NCO/OH est compris entre 0,5 et 0,99,
d'un diol (E) ayant une masse molaire inférieure à 500,
et du diphénylméthane-4,4'-diisocyanate (C2).

4. Polyuréthane selon la revendication 1, dans lequel ledit diol polymère (B) est un polyester obtenu à partir d'un diacide aliphatique ayant 4 à 8 atomes de carbone en chaîne méthylénique et d'un diol aliphatique ayant 4 à 9 atomes de carbone dans la chaîne principale.

5. Polyuréthane selon la revendication 1, dans lequel ledit diol polymère (B) est un polycarbonate obtenu à partir d'un diol aliphatique ayant 4 à 9 atomes de carbone dans la chaîne principale.

6. Polyuréthane selon la revendication 1, dans lequel ledit diisocyanate organique (C1) est au moins un membre choisi dans le groupe constitué par le diphénylméthane-4,4'-diisocyanate, le diisocyanate d'isophorone et le diisocyanate de 2,4- ou 2,6-tolylène.

7. Procédé de production de polyuréthanes selon la revendication 2, dans lequel ledit diol polymère (B) est un polyester obtenu à partir d'un diacide aliphatique ayant 4 à 8 atomes de carbone en chaîne méthylénique et d'un diol aliphatique ayant 4 à 9 atomes de carbone dans la chaîne principale.

8. Procédé de production de polyuréthanes selon la revendication 2, dans lequel ledit diol polymère (B) est un polycarbonate obtenu à partir d'un diol aliphatique ayant 4 à 9 atomes de carbone dans la chaîne principale.

9. Procédé de production de polyuréthanes selon la revendication 2, dans lequel ledit diisocyanate organique (C1) est au moins un membre choisi dans le groupe constitué par le diphénylméthane-4,4'-diisocyanate, le diisocyanate d'isophorone et le diisocyanate de 2,4- ou 2,6-tolylène.

10. Feuille de similicuir selon la revendication 3, dans laquelle ledit diol polymère (B) est un polyester obtenu à partir d'un diacide aliphatique ayant 4 à 8 atomes de carbone en chaîne méthylénique et d'un diol aliphatique ayant 4 à 9 atomes de carbone dans la chaîne principale.

11. Feuille de similicuir selon la revendication 3, dans laquelle ledit diol polymère (B) est un polycarbonate obtenu à partir d'un diol aliphatique ayant une longueur de chaîne de 4 à 9 atomes de carbone.

12. Feuille de similicuir selon la revendication 3, dans laquelle ledit diisocyanate organique (C1) est au moins un membre choisi dans le groupe constitué par le diphénylméthane-4,4'-diisocyanate, le diisocyanate d'isophorone et le diisocyanate de 2,4- ou 2,6-tolylène.
